# EUROPEAN PATENT APPLICATION

(11) **EP 4 755 550 A1**
(43) Date of publication of application: **10.06.2026**
(21) Application number: 24217614.7
(22) Date of filing: 04.12.2024
(51) Int. Cl.: B23B 1/00, B23B 27/16

(54) **METHOD FOR MACHINING A METAL WORKPIECE**

(71) Applicant: AB Sandvik Coromant, 811 81 Sandviken (SE)
(72) Inventor: WICKSTRÖM, David, 811 81 Sandviken (SE); LÖF, Ronnie, 811 81 Sandviken (SE); WIKBLAD, Krister, 811 81 SANDVIKEN (SE)
(74) Representative: Sandvik

(57) **Abstract**

The invention relates to a method for machining a surface of a metal workpiece (20) using a turning tool (10) comprising a tool body and a first cutting insert (1) arranged at a front end (8) of the tool body, wherein the method comprises:
- a first entering step (31) in which the turning tool (10) is moved towards a first end (41) of a longitudinal portion (21) of the workpiece along a first entering path (L1) that is transverse to both a longitudinal direction (Z) and a radial direction (X), such that the first cutting insert (1) cuts chips from the longitudinal portion (21) of the metal workpiece (20) at an entering angle (E1) of a first cutting edge (2) of the first cutting insert of 60°-120°; and
- a longitudinal turning step (36) in which the turning tool (10) is moved along the longitudinal direction (Z) away from the first end (41) and towards a second end (42) of the longitudinal portion (21) such that the first cutting insert (1) cuts chips from the longitudinal portion (21) of the metal workpiece (20) at an entering angle (E2) of a second cutting edge (3) of the first cutting insert of 10°- 45°.

## Description

### TECHNICAL FIELD

The invention relates to metal cutting, and in particular to turning operations wherein a turning tool is used for machining a rotating metal workpiece.

### BACKGROUND ART

Within the field of metal cutting, a turning tool may be used for machining the surface of a rotating metal workpiece. A cutting insert, for example made of cemented carbide or some other wear resistant material, is commonly arranged at the front of such turning tool.

Workpieces to be machined may come in various shapes. A workpiece may often have a generally longitudinal extension along the rotation axis thereof but also include one or more radial portions or "shoulders", i.e., portions of the workpiece extending in a radial direction (in a plane perpendicular to the rotation axis). It may be challenging to efficiently machine such workpieces, in particular in the vicinity of a corner formed at the transition between the radial portion and a longitudinal portion connected therewith. If the corner is the result of a forging process, such corner may have significant variations in dimension and shape, rendering the machining in the vicinity of the corner particularly challenging. In other situations, it may be desirable to reduce the diameter of a cylindrical workpiece along only a part of the longitudinal extension of the workpiece, e.g., such that a shoulder is created. Creating such shoulder, and subsequently machining in the vicinity of such shoulder, may also be challenging.

Traditionally, when using a turning tool for longitudinal turning of a workpiece including a shoulder, the feed of the turning tool is directed towards the shoulder. However, in recent years it has become increasingly popular to use turning tools engaging the workpiece at low entering angles, in which case a feed direction towards a shoulder may not be very suitable. In such cases, a feed direction away from the shoulder is often used instead. EP3359321 B1 discloses such turning methods. In a turning operation according to such methods, when entering the material, the turning tool is usually moved such that a nose cutting edge of the cutting insert enters the workpiece, i.e., goes into cut, in a motion along an arc of a circle. Such entry may be suitable mainly if using slender cutting inserts with small nose angles that are not very strong and robust. An entry along an arcuate path may also generate long chips that are difficult to handle, especially if the entry into the material is in the vicinity of a corner of which the variation in shape and dimension is significant.

Hence, there is a need for improved methods for turning, in particular when machining a workpiece including a shoulder or when machining a workpiece along only a portion of its longitudinal extension.

### SUMMARY

It is an object of the present invention to mitigate the shortcomings of the prior art and to provide a method for machining a workpiece using a turning tool that efficiently machines a longitudinal portion of the workpiece, in particular a longitudinal portion extending from a shoulder of the workpiece or a longitudinal portion that corresponds to only a part of the full longitudinal extension of the workpiece. Another object is to provide turning methods suitable for turning tools that includes strong cutting inserts with large nose angles.

Thus, according to a first aspect, the invention relates to a method for machining a surface of a metal workpiece using a turning tool, wherein the turning tool comprises a tool body having a longitudinal extension from a rear end to a front end thereof, and a first cutting insert arranged at the front end, wherein the first cutting insert includes a first cutting edge, a second cutting edge, and a convex nose cutting edge connecting the first and the second cutting edges. The metal workpiece rotates around a rotation axis extending along a longitudinal direction of the workpiece, wherein the workpiece comprises a longitudinal portion extending in the longitudinal direction from a first end to a second end. The method comprises:
- a first entering step in which the turning tool is moved towards the first end and the rotation axis along a first entering path that is transverse to both the longitudinal direction and a radial direction of the workpiece, such that the first cutting insert cuts chips from the longitudinal portion of the metal workpiece at an entering angle of the first cutting edge of 60°-120°; and
- a longitudinal turning step in which the turning tool is moved along the longitudinal direction away from the first end and towards the second end such that the first cutting insert cuts chips from the longitudinal portion of the metal workpiece at an entering angle of the second cutting edge of 10°- 45°.

When using such method, different cutting edges of the first cutting insert are utilized in different machining operation steps. The same cutting insert can be used for machining in a direction towards the first end, when entering the workpiece material, and when machining in a direction away from the first end, in a longitudinal turning operation using a low entering angle. Significant portions of the available cutting edges of the tool, including portions of the first cutting edge as well as portions of the second cutting edge, may be engaged in cutting chips from the workpiece, providing an effective overall utilization of the cutting insert.

The first and second ends of the longitudinal portion are located in first and second planes, respectively, between which the longitudinal portion extends, wherein such first and second planes are perpendicular to the rotation axis. Hence, a movement of the turning tool towards the first end and towards the rotation axis corresponds to a movement in which the turning tool approaches both the rotation axis and a plane perpendicular to the rotation axis in which the first end is located.

An "entering angle" as used herein should be understood as the angle between the feed direction and the cutting edge. A "low" or "small" entering angle as used herein refers to an entering angle below 45°.

A radial direction of the workpiece is to be understood as a direction extending radially with respect to the rotation axis of the workpiece.

The method may be particularly beneficial when used with cutting inserts having a relatively large nose angle (the angle between the first cutting edge and the second cutting edge in a top view of the cutting insert), such as within a range of 70° - 110°. Such nose angle makes it easy to perform efficient entry into the workpiece material using the first cutting edge during the first entering step, and longitudinal turning using the second cutting edge at a low entering angle. A further advantage is that such cutting inserts are strong and robust.

The first cutting edge and the second cutting edge are preferably straight in a top view of the cutting insert. Consequently, the entering angle along these cutting edges does not change.

The first cutting insert may be an indexable cutting insert including one or more additional sets of first, second, and nose cutting edges, such that different sets of cutting edges can be positioned in active or inactive positions depending on how the cutting insert is mounted in the insert seat.

The inventors have found that, during the first entering step, an entering angle that is relatively close to 90°, or at least within a range of 60°-120°, will often result in chips that are easy to handle. The chip control, and thus the reliability of the cutting process, is thereby improved. Moreover, the wear on the cutting insert will be reduced. The entering angle of the first cutting edge during the first entering step may for example be in a range of 70° - 110°, or in a range of 80°- 100°.

In each of the machining steps according to the method described herein, the nose cutting edge connecting the first and second cutting edge will engage the workpiece and cut chips therefrom. The nose cutting edge is the part that generates the machined surface. For some types of cutting inserts, for example cutting inserts with a nose cutting edge having a considerable extension (big radius), it is envisaged (although usually not preferred in order to obtain a beneficial chip formation) that *only* the nose cutting edge is engaged in cutting during some of the machining steps discussed herein. In other words, the first or second cutting edge is not necessarily engaged in cutting chips from the workpiece in each machining step but is nevertheless oriented with respect to the workpiece such that the cutting edges *would* form entering angles as defined herein if engaging the workpiece. The entering angle along the nose cutting edge obviously vary due to the convex curvature thereof, but it will be similar to the entering angle of the associated first or second cutting edge at least in the vicinity thereof.

During the first entering step, simultaneous cutting with both the first cutting edge and the second cutting edge, i.e., wherein both the first cutting edge and the second cutting edge are in cut at the same time, should normally be avoided for achieving a reliable cutting process with beneficial chip formation and manageable cutting forces. Therefore, the first entering path is preferably not too steep (in relation to the rotation axis) such that only the nose cutting edge and the first cutting edge, but not the second cutting edge, cut chips from the longitudinal portion during the first entering step. Thus, according to some embodiments, the longitudinal component of the first entering path is greater than the radial component thereof, for example greater to an extent that the second cutting edge does not engage the workpiece during the first entering step.

According to some embodiments, the first entering path is a straight line. Such straight line may form an angle of 5° - 45° to the longitudinal direction.

To ensure that the second cutting edge does not engage the longitudinal portion during the first entering step, the angle formed to the longitudinal direction by the straight line defining the first entering path may be equal to, or less than, the entering angle of the second cutting edge in the longitudinal turning step.

A first entering path in the form of a straight line that forms an angle to the longitudinal direction that is equal to, or substantially equal to, the entering angle of the second cutting edge in the longitudinal turning step may provide a particularly efficient (steep) entry into the longitudinal portion of the workpiece. However, in some cases a less steep entry into the workpiece may be preferred.

A movement along a straight line in the first entering step may be advantageous from a chip formation perspective and would usually be the most effective path for entering the longitudinal portion of the workpiece. Nevertheless, it is also envisaged that the first entering path may be curved, for example extending along an arc of a circle, for the whole of, or a part of, the entering path. In any case, the first entering path is directed towards the first end and the rotation axis along the whole extension thereof, and the entering angle of the first cutting edge will be in a range of 60°-120° along at least a part of, and preferably along more than half of the first entering path. For example, according to some embodiments, irrespective of whether the entering path is straight or (partly) curved, the entering angle of the first cutting edge may be in a range of 60°-120° along the whole extension of the first entering path.

The method described hereinabove may be repeated to remove more material from the longitudinal portion of the workpiece in multiple cuts.

According to some embodiments, the turning tool comprises a second cutting insert that includes:
- a first cutting edge,
- a second cutting edge, and
- a convex nose cutting edge connecting the first and the second cutting edges,
and wherein the second cutting insert is arranged at the front end of the tool body beside the first cutting insert such that, with respect to the longitudinal extension of the tool body, a front point of the second cutting insert is located rearward of a front end, but forward of a rear end, of the second cutting edge of the first cutting insert, and wherein, in the longitudinal turning step, both the first cutting insert and the second cutting insert cut chips from the longitudinal portion of the metal workpiece at entering angles of the respective second cutting edges of 10°- 45°.

A front point of the second cutting insert should be understood as the point that is located, with respect to the longitudinal extension of the turning tool body, in front of any other point on the second cutting insert and is also the point of the second cutting insert that is located closest to the rotation axis of the workpiece when the turning tool is arranged for machining the workpiece.

Correspondingly, a front end and a rear end of the second cutting edge of the first cutting insert should be understood as the end points of the second cutting edge that are located, with respect to the longitudinal extension of the turning tool body, closest to the front end and the rear end, respectively, of the turning tool body.

The use of a turning tool having multiple cutting inserts arranged in this way will, in a cost effective way, provide the possibility to use a large cutting depth.

More specifically, with such arrangement, the second cutting edge of the second cutting insert can be seen as a continuation of the second cutting edge of the first cutting insert. Due to the convexly curved nose cutting edges and the required separation between the cutting inserts, the respective second cutting edges need to overlap to some extent in a direction along the longitudinal extension of the turning tool body. However, the combined length of the respective second cutting edges of the first and second cutting inserts, along the longitudinal extension of the turning tool body, will still be greater than the length of each individual second cutting edge, meaning that a greater cutting depth can be achieved.

According to some embodiments, the entering angle of the second cutting edge of the second cutting insert is the same as the entering angle of the second cutting edge of the first cutting insert during the longitudinal turning step.

For some configurations of first and second cutting inserts, in particular when both the first and the second cutting inserts are of the positive type and not tipped in with respect to the turning tool for obtaining clearance to the workpiece, it may be possible to engage the workpiece with both cutting inserts during the first entering step. Hence, according to some embodiments, the second cutting insert engages the workpiece during at least a part of the first entering step, wherein both the first and the second cutting inserts cut chips from the longitudinal portion of the workpiece at entering angles of the respective first cutting edges of 60°-120°. Such method may provide a particularly efficient and easy entering into the workpiece before commencing the longitudinal turning step. According to some embodiments, the entering angle of the first cutting edge of the second cutting insert is the same as the entering angle of the first cutting edge of the first cutting insert during the first entering step.

For other configurations, for example wherein the second cutting insert is of a negative type, entering the workpiece with the first cutting edge of the second cutting insert during the first entering step may not be possible since an inclined orientation of the cutting insert with respect to the turning tool body (that might be required to obtain clearance to the workpiece) may result in that the flank of the second cutting insert would engage the workpiece surface in the entering step. Hence, when using such cutting insert configurations, another approach may be required for the entering step that guarantees that the first cutting edge of the second cutting insert does not engage the workpiece. This can be achieved by selecting a moderate first entering path (i.e., not too steep with respect to the rotation axis), such that engagement of the second cutting insert with the workpiece is avoided.

Another possible approach would be to perform the entering into the workpiece in multiple steps. Hence, according to some embodiments, the method comprises, after the first entering step and before the longitudinal turning step:
- a positioning step in which the turning tool is moved along the longitudinal direction towards the first end; and
- a second entering step in which the turning tool is moved towards the first end and the rotation axis along a second entering path that is transverse to both the longitudinal direction and the radial direction, such that the first cutting insert cuts chips from the longitudinal portion of the metal workpiece at an entering angle of the first cutting edge of 60°-120°.

During the positioning step, the first cutting insert cuts chips from the longitudinal portion of the metal workpiece at an entering angle of the first cutting edge that is smaller than the entering angle of the first cutting edge in the first entering step. More specifically, the magnitude by which the entering angle in the positioning step is smaller than the entering angle in the first entering step corresponds to the angle at which the turning tool was moved with respect to the longitudinal direction during the first entering step, i.e., the angle to the longitudinal direction formed by the first entering path.

According to some embodiments, the turning tool is moved in the positioning step along the longitudinal direction to an intended start position for the second entering step. Such intended start position for the second entering step may correspond to a position in which radial clearance for the second cutting insert with respect to the workpiece is obtained, i.e., a position in which at least a part of the second cutting insert is located radially outwards from a portion of the workpiece surface that has already been machined by the first cutting insert during the first entering step, such that the second cutting insert will not engage the workpiece during the subsequent second entering step.

The second entering path may be parallel to the first entering path. Accordingly, the entering angles of the respective first cutting edges of the first and second cutting inserts may be the same in the second entering step as in the first entering step.

The method may comprise additional steps. As an example, method steps corresponding to the positioning step and the second entering step may be repeated one or more times before commencing the longitudinal turning step. Repeating the positioning step and the second entering step may be beneficial if the turning tool includes three or more cutting inserts arranged beside each other and if relatively steep first and second entering paths (towards the workpiece rotation axis) is required or preferred to obtain a favorable cutting process.

According to some embodiments, the method described herein is adapted for efficient cutting close to a shoulder of a workpiece. Accordingly, the metal workpiece may further comprise a radial portion (shoulder) extending in the radial direction, and a corner portion connecting the longitudinal portion and the radial portion. The first end of the longitudinal portion may correspond to a location at which the longitudinal portion meets such corner portion. Hence, the first end may be located in a plane, perpendicular to the rotation axis, through the workpiece at a location where the longitudinal portion meets the corner portion.

Hence, the entering step preceding the longitudinal turning step may involve cutting chips from a region of the longitudinal portion in the immediate vicinity of a corner portion that connects the longitudinal portion and a radial portion.

Such corner portion is usually not a completely abrupt transition from the radial portion to the longitudinal portion but rather formed by a radius or curved portion, forming a smooth (or at least extended) transition between the radial portion and the longitudinal portion. In particular, if the corner portion is formed by a forging process, the corner portion may be irregular and also have an extension that is significant.

In some of the machining steps, at least a part of such corner portion may be engaged by the first cutting insert. Thus, according to some embodiments, at least one of the first entering step, the positioning step, and the second entering step comprises cutting chips from at least a part of the corner portion.

According to another aspect, the invention relates to a system comprising a computer numerical controlled (CNC) machine tool including a turning tool for machining a metal workpiece, wherein the system further comprises processing circuitry and a memory and is configured to perform the method according to any of the embodiments described herein.

The CNC machine tool may be any machine tool that can be used for turning a metal work piece, and where the motion of the machine, such as tool path, depth of cut, feed rate, cutting speed and revolutions per time unit, is or can be controlled by a computer.

The processing circuitry and memory may be intrinsic parts of the CNC machine tool, e.g., comprised in the built-in controller of the CNC machine tool. Alternatively, or in combination, an external processing circuitry and memory may be in communicational contact with the CNC machine tool. The processing circuitry is configured to control the CNC machine tool, and thus the movement of the turning tool.

The processing circuitry may comprise one or more programmable processors, application-specific integrated circuits, field programmable gate arrays or combinations of these adapted to execute instructions. The memory may contain instructions executable by said processing circuitry, whereby the CNC machine tool is operative for machining the workpiece.

The instructions executable by the processing circuitry may be arranged as a numerical control program, for example stored in the memory. The numerical control program may comprise computer readable code means, which when executed by the processing circuitry causes the system and the CNC machine tool to perform the method according to any of the embodiments described herein.

The numerical control program may be carried by a computer readable storage medium connectable to the processing circuitry, such as the memory. The memory may be realized as for example a RAM (Random-access memory), ROM (Read-Only Memory) or an EEPROM (Electrical Erasable Programmable ROM). Further, the numerical control program may be carried by a separate computer-readable medium, such as a CD, DVD or flash memory, from which the program could be downloaded into the memory. Alternatively, the numerical control program may be stored on a server or any other entity connected to which the system has access. The numerical control program may then be downloaded from the server into the memory.

According to another aspect, the invention relates to a computer program for generating, based on input comprising information about a turning tool and dimensions of a metal workpiece to be machined, the numerical control program according to any of the embodiments described herein.

Such computer program may for example be a computer program for Computer Aided Manufacturing (CAM) such as a CAD/CAM computer program in which CAD models of the turning tool and workpiece, together with a model of the component to be machined, is used as input to a tool path generating process performed in the CAD/CAM computer program, wherein such computer program for this purpose includes specific modules or functions for generating tool paths in accordance with the machining methods of any of the embodiments described herein, i.e., wherein preferred tool path sequences corresponding to the method steps disclosed in any of the embodiments described herein are stored in such computer program, to be adapted to the specific turning tool properties and workpiece characteristics according to the input.

### BRIEF DESCRIPTION OF DRAWINGS

The solution will now be described in more detail by means of exemplary embodiments and with reference to the accompanying drawings, in which:
Fig. 1 illustrates a system comprising a CNC machine tool and a turning tool for machining a workpiece, wherein the figure also includes an enlarged view of the turning tool machining the workpiece.
Fig. 2A - 2C illustrate steps of a method according to the invention.
Fig. 3 is a perspective view of a cutting insert that is utilized as first cutting insert according to embodiments of the method.
Fig. 4 is a perspective view of a cutting insert that is utilized as second cutting insert according to embodiments of the method.
Figs. 5A - 5G illustrate steps of a method according to embodiments involving additional machining steps.
Figs. 6A - 6C illustrate steps of a method according to an embodiment using a turning tool with a different configuration of cutting inserts than used in the other illustrated embodiments.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### DETAILED DESCRIPTION OF EMBODIMENTS

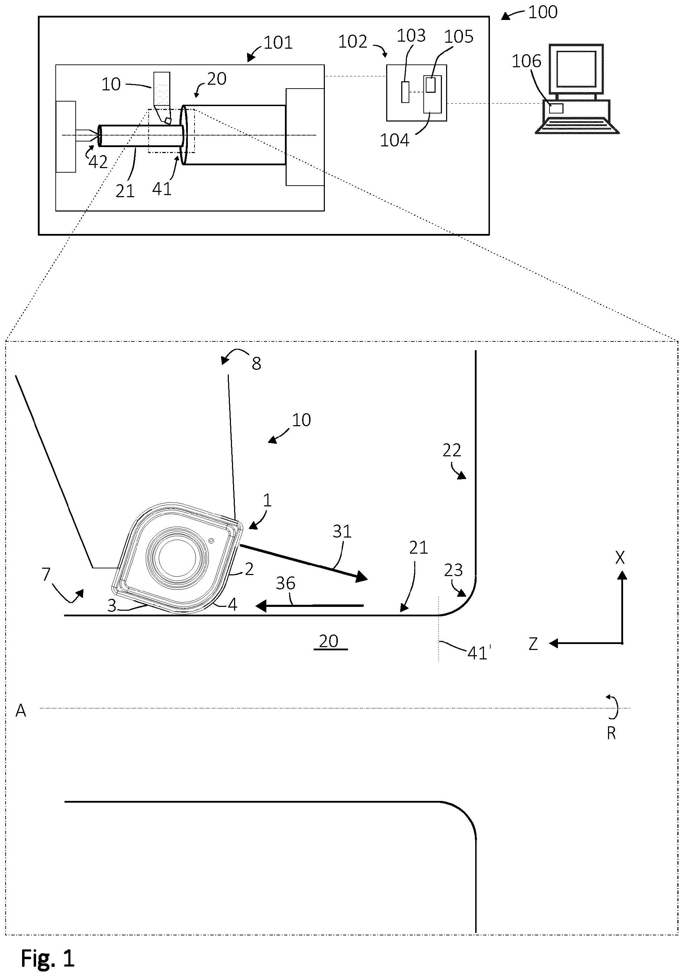

Fig. 1 shows a system 100 according to the invention that comprises a CNC machine tool 101, schematically illustrated in Fig. 1 as including a turning tool 10 and a workpiece 20 to be machined. The system 100 further comprises a controller 102 for controlling the cutting process, which controller may be an integral part of the CNC machine tool 101. The CNC machine tool 101 may for example be a CNC lathe or any other machine tool which can be used for turning a metal work piece and is controlled by a computer. The controller 102 comprises processing circuitry 103 and a memory 104 in which a numerical control program 105 is stored. The controller 101 is communicationally coupled to the CNC machine tool 101 for control thereof.

Fig. 1 also shows a computer comprising a computer program 106 that can be used for generating the numerical control program 105, at least partly based on input regarding the characteristics of the turning tool 10 and the workpiece 20. The numerical control program 105 obtained from the use of the computer program 106 is loaded into the memory 104.

When the numerical control program 105 is executed by the processing circuitry 103, the controller is configured to control the CNC machine tool 101, including the turning tool 10, to perform a method for machining the rotating workpiece 20, which method will be described in further detail below.

The enlarged portion in fig. 1 illustrates a part of the workpiece 20 including a longitudinal portion 21 extending parallel with the rotation axis A along a longitudinal direction Z from a first end 41, located in a first plane 41' that is perpendicular to the rotation axis A, to a second end 42, located in second plane 42' that is perpendicular to the rotation axis A. The workpiece 20 also comprises a radial portion (shoulder) 22 extending in a direction perpendicular to the rotation axis A in a radial direction X, and a corner portion 23 connecting the shoulder 22 and the longitudinal portion 21. Hence, in the embodiment illustrated in Fig. 1, the first end 41 of the longitudinal portion 21 corresponds to the transition from the longitudinal portion 21 to the corner portion 23, i.e., the location at which the longitudinal portion 21 meets the corner portion 23.

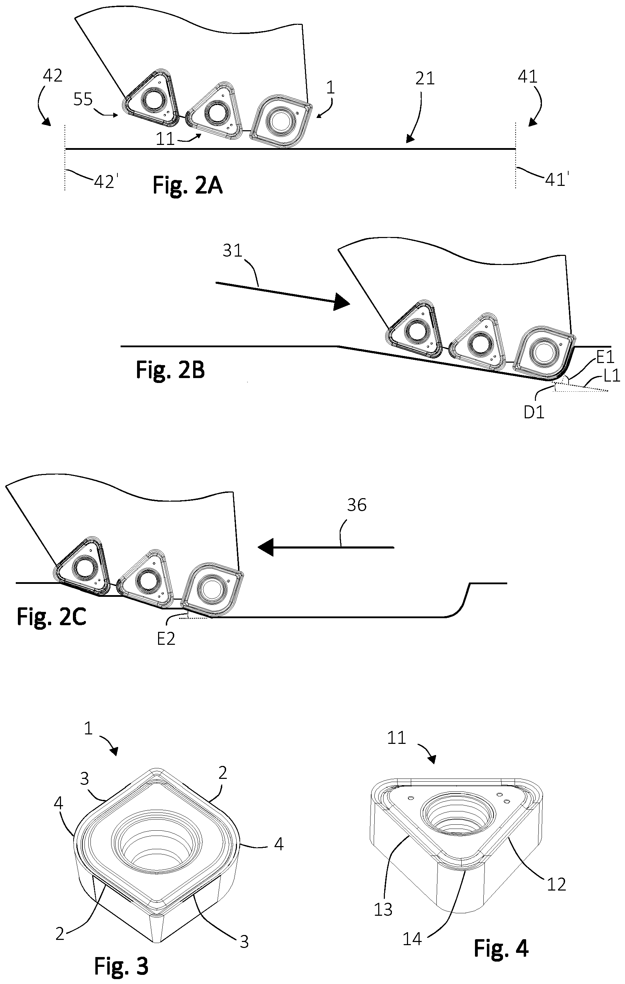

The turning tool 10 includes a tool body having a longitudinal extension from a rear end 8 to a front end 7 thereof. A first cutting insert 1 is arranged at the front end 7. The first cutting insert 1, illustrated in more detail in Fig. 3, comprises a first cutting edge 2, a second cutting edge 3 and a corner cutting edge 4 connecting the first cutting edge 2 and the second cutting edge 3. The first cutting insert 1 is indexable and comprises two such sets of cutting edges. In Fig. 1, only the cutting edges currently arranged as active are denoted by reference numerals 2-4.

In the illustrated embodiment, the nose angle between the first and second cutting edge is 90°.

The method, illustrated in Fig. 1 and in Figs. 2B-2C begins with a first entering step 31 in which the turning tool 10 is moved towards the first end 41 and the rotation axis A along a first entering path L1 that is transverse to both the longitudinal direction Z and the radial direction X. The first entering path L1 illustrated in Fig. 2B, in this case corresponding to a straight line forming an angle D1 of approximately 10° to the longitudinal direction Z, results in an entering angle E1 of the first cutting edge 2 of the first cutting insert 1. In the illustrated embodiment, the entering angle E1 is approximately 80° during the first entering step 31.

Thereafter, in a longitudinal turning step 36, the turning tool 10 is moved along the longitudinal direction Z away from the first end 41 such that the first cutting insert cuts chips from the longitudinal portion 21 of the metal workpiece. Fig. 2C illustrates the entering angle E2 of the second cutting edge 3. In the illustrated embodiment, the entering angle E2 is approximately 18° during the longitudinal turning step 36.

According to the embodiment illustrated in Figs. 2A-2C, the turning tool 10 includes three cutting inserts, i.e., a first cutting insert 1, a second cutting insert 11 and a third cutting insert 55, arranged at the front end of the turning tool body. Such arrangement may provide for a great cutting depth during the longitudinal turning step 36. Due to the small angle D1 of the first entering path L1, the full cutting depth can be reached without the second or third cutting inserts 11, 55 encountering the workpiece during the first entering step 31.

In all the figures, the method steps 31 and 36, and the optional method steps 32-35 that will be described in further detail below, are illustrated by arrows indicating the corresponding feed directions, i.e., the directions in which the turning tool 10 is moved in relation to the rotating workpiece 20.

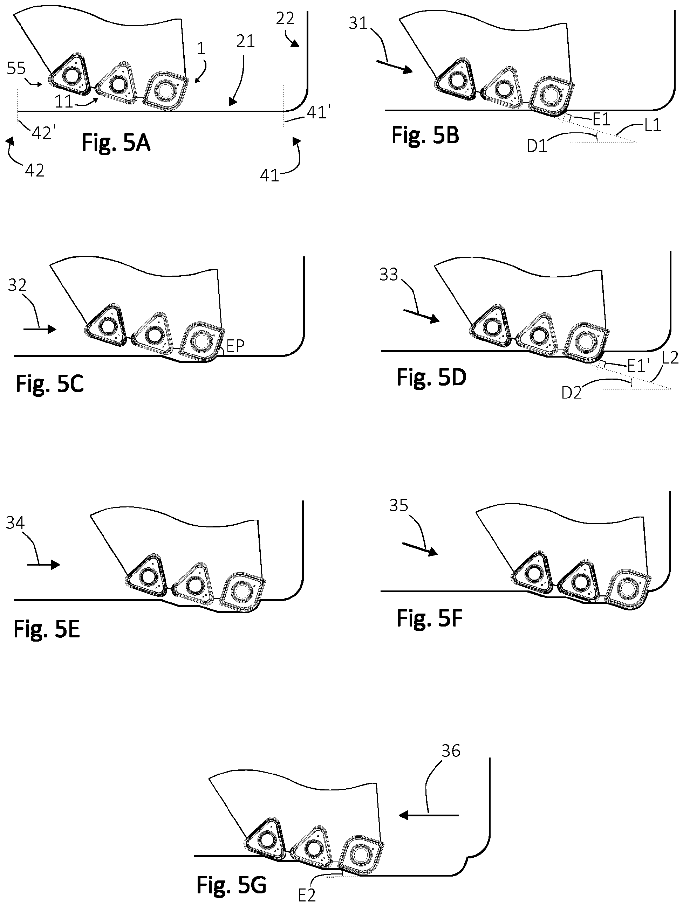

Fig. 4 shows an example of a second cutting insert 11 that may be arranged at the front end 7 of the tool body of the turning tool 10, as illustrated in Figs. 2A-2C and Figs. 5A-5G. Like the first cutting insert 1, the second cutting insert 11 also includes a first cutting edge 12, a second cutting edge 13 and a nose cutting edge 14. In the illustrated embodiment, the first cutting edge 12 is not intended for cutting when in a position in which the second cutting edge 13 is active (for longitudinal turning). However, the second cutting insert according to this exemplary embodiment is three times indexable and the first cutting edge 12 would therefore, in another indexing position, correspond to a second cutting edge 13 and thus be arranged for cutting chips from the workpiece during longitudinal turning.

In the embodiment illustrated in Figs. 5A-5G, the same turning tool 10, including three cutting inserts 1, 11, 55, is used, but with a steeper first entering path L1, in this case an entering path corresponding to a straight line that forms an angle D1 of approximately 18° to the longitudinal direction Z, i.e., an angle corresponding to the entering angle of the second cutting edge 3 during the longitudinal turning step. This is the steepest angle that can be used without the second cutting edge 3 of the first cutting edge 1 engaging the workpiece during the first entering step. The first entering path L1 will in this case result in an entering angle E1 of the first cutting edge 2 of the first cutting insert 1 of approximately 90°. To avoid that the second and third cutting inserts engages the workpiece during the entering, the method according to this embodiment includes additional steps.

Accordingly, as illustrated in Fig. 5C, in a first positioning step 32, carried out after the first entering step 31 (which ends before the second cutting insert 11 reaches the workpiece 20), the turning tool 10 is moved along the longitudinal direction Z towards the first end 41 (in this embodiment corresponding to a direction towards a radial portion 22 of the workpiece 20) to an intended start position for a subsequent second entering step 33, illustrated in Fig. 5D.

The intended start position, in this case, is a position in which radial clearance for the second cutting insert 11 with respect to the workpiece 20 is obtained. This corresponds to a position in which at least a part of the second cutting insert 11 is located radially outwards from a part of the workpiece surface that has already been machined by the first cutting insert 1 during the first entering step 31, such that the second cutting insert 11 will not engage the workpiece during the subsequent second entering step 33. The entering angle EP of the first cutting edge of the first cutting insert during the positioning step corresponds to the entering angle E1 in the first entering step minus the angle D1 formed to the longitudinal direction by the first entering path L1, i.e., in this case EP = 90° - 18° = 72°

As illustrated in Fig. 5D, the second entering step 33 includes moving the turning tool 10 towards the first end 41 and the rotation axis A along a second entering path L2 that is transverse to both the longitudinal direction Z and the radial direction X. The second entering path L2, in this case a straight line forming an angle D2 of approximately 18° to the longitudinal direction Z, results in an entering angle E1 of the first cutting edge 2 of the first cutting insert 1. In the illustrated embodiment, since the second entering path L2 is parallel to the first entering path L1, the entering angle E1 in the second entering step 33 is equal to the entering angle E1 in the first entering step 31, i.e., approximately 90°.

Thereafter, as illustrated in Figs. 5E-5F, a second positioning step 34 and a third entering step 35 are performed. The second positioning step 34 is similar to the first positioning step 32, and the third entering step 35 is similar to the second entering step 33. Hence, the turning tool is moved in the second positioning step 34 to an intended start position for the third entering step 35, in which start position both the second cutting insert 11 and the third cutting insert 55 have radial clearance with respect to the workpiece.

After the third entering step 35, the longitudinal turning step 36 is performed, illustrated in Fig. 5G, in which the turning tool is moved along the longitudinal direction Z away from the first end 41 such that each of the first cutting insert 1, the second cutting insert 11, and the third cutting insert 55 cut chips from the longitudinal portion 21 of the metal workpiece 20. In the illustrated embodiment, the entering angle of the second cutting edge 13 of the second cutting insert 11, and the corresponding entering angle of the third cutting insert 55, is the same as the entering angle E2 of the second cutting edge 3 of the first cutting insert 1, in this case about 18°.

When using the method illustrated in Figs. 5A-5G, with rather steep entering paths, a slightly greater entering angle of the first cutting edge of the first cutting insert can be achieved in each of the entering steps, compared to the method illustrated in Figs. 2A-2C. Such entering angle may be advantageous in some cases, whereas a smaller entering angle, as obtained by the method illustrated in Figs. 2A-2C, may be advantageous in other cases. If using the entering approach according to the method illustrated in Figs. 5A-5G, the number of entering steps preferably corresponds to the number of cutting inserts arranged at the front end of the turning tool body.

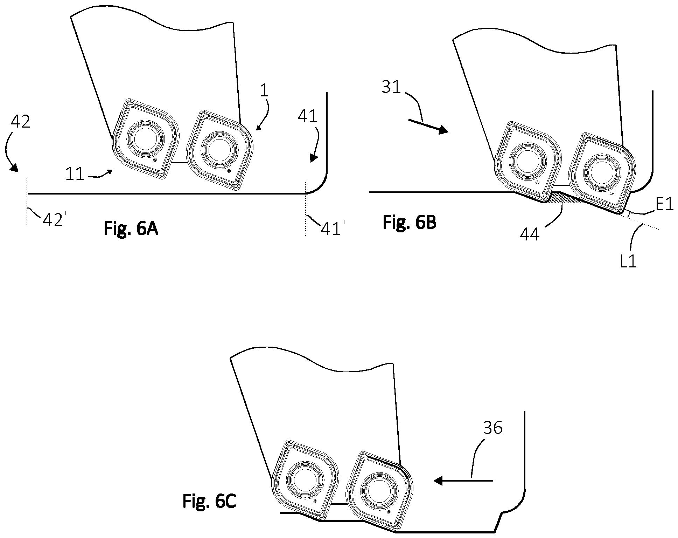

Figs. 6A-6C illustrate an alternative approach used for the first entering step 31. In the illustrated embodiment, the first cutting insert 1 and the second cutting insert 11 are of the same type, although oriented differently (rotated 90°) compared to the first cutting insert 1 in previously illustrated embodiments, such that a cutting edge that was denoted as a first cutting edge 2 in previous embodiments now corresponds to a second cutting edge 3, and vice versa. With this cutting insert setup, the second cutting insert 11 may also engage the workpiece during the first entering step 31. In other words, the second cutting insert 11 is of a type and arranged such that it can engage the longitudinal portion 21 of the workpiece in a direction along the first entering path L1, as illustrated in Fig. 6B. In the illustrated embodiment, the entering angles E1 of the first cutting edges of the respective first and second cutting inserts in the first entering step are the same, in this case approximately 90°. The subsequent longitudinal turning step 36, illustrated in Fig. 6C, is performed in a manner similar to previously described embodiments. A difference compared to previous embodiments is that the first cutting insert 1 will have to pass through a small region of additional uncut material 44 (indicated in Fig. 6B) during the longitudinal turning step, which is not favorable and would not be feasible in the long run but is acceptable due to the small size of such region of additional material 44.

## Claims

1. A method for machining a surface of a metal workpiece (20) using a turning tool (10), wherein the turning tool comprises a tool body having a longitudinal extension from a rear end (7) to a front end (8) thereof, and a first cutting insert (1) arranged at the front end (8), wherein the first cutting insert includes:
- a first cutting edge (2),
- a second cutting edge (3), and
- a convex nose cutting edge (4) connecting the first and the second cutting edges,
and wherein the metal workpiece (20) rotates around a rotation axis (A) extending along a longitudinal direction (Z) of the workpiece, wherein the metal workpiece (20) comprises a longitudinal portion (21) extending in the longitudinal direction (Z) from a first end (41) to a second end (42),
wherein the method comprises:
- a first entering step (31) in which the turning tool (10) is moved towards the first end (41) and the rotation axis (A) along a first entering path (L1) that is transverse to both the longitudinal direction (Z) and a radial direction (X) of the workpiece, such that the first cutting insert (1) cuts chips from the longitudinal portion (21) at an entering angle (E1) of the first cutting edge (2) of 60°-120°; and
- a longitudinal turning step (36) in which the turning tool (10) is moved along the longitudinal direction (Z) away from the first end (41) and towards the second end (42) such that the first cutting insert (1) cuts chips from the longitudinal portion (21) at an entering angle (E2) of the second cutting edge (3) of 10°- 45°.

2. The method according to claim 1, wherein the entering angle (E1) of the first cutting edge in the first entering step (31) is in the range 80°- 100°.

3. The method according to any of the previous claims, wherein the first entering path (L1) is a straight line that forms a first angle (D1) of 5° - 45° to the longitudinal direction (Z).

4. The method according to claim 3, wherein the first angle (D1) is equal to, or less than, the entering angle (E2) of the second cutting edge (3) in the longitudinal turning step (36).

5. The method according to any of the previous claims, wherein the turning tool comprises a second cutting insert (11) that includes:
- a first cutting edge (12),
- a second cutting edge (13), and
- a convex nose cutting edge (14) connecting the first and the second cutting edges,
and wherein the second cutting insert (11) is arranged at the front end (8) of the tool body beside the first cutting insert (1) such that, with respect to the longitudinal extension of the tool body, a front point of the second cutting insert is located rearward of a front end, but forward of a rear end, of the second cutting edge (3) of the first cutting insert, and wherein, in the longitudinal turning step (36), both the first cutting insert (1) and the second cutting insert (11) cut chips from the longitudinal portion (21) at entering angles (E2) of the respective second cutting edges (3, 13) of 10°- 45°.

6. The method according to claim 5, wherein, in the longitudinal turning step, the entering angle of the second cutting edge (13) of the second cutting insert (11) is the same as the entering angle of the second cutting edge (3) of the first cutting insert (1).

7. The method according to any of the claims 5-6, wherein the second cutting insert (11) engages the workpiece during at least a part of the first entering step (31), wherein both the first and the second cutting inserts (1, 11) cut chips from the longitudinal portion (21) at entering angles of the respective first cutting edges (2, 12) of 60°-120°.

8. The method according to claim 7, wherein, in the first entering step (31), the entering angle of the first cutting edge (12) of the second cutting insert (11) is the same as the entering angle of the first cutting edge (2) of the first cutting insert (1).

9. The method according to any of the claims 5-6, wherein the method comprises, after the first entering step (31) and before the longitudinal turning step (36):
- a positioning step (32) in which the turning tool (10) is moved along the longitudinal direction (Z) towards the first end (41); and
- a second entering step (33) in which the turning tool is moved towards the first end (41) and the rotation axis (A) along a second entering path (L2) that is transverse to both the longitudinal direction (Z) and the radial direction (X), such that the first cutting insert (1) cuts chips from the longitudinal portion (21) at an entering angle of the first cutting edge (2) of 60°-120°.

10. The method according to claim 9, wherein, in the positioning step (33), the turning tool is moved along the longitudinal direction (Z) to an intended start position for the second entering step (33) that corresponds to a position in which radial clearance for the second cutting insert (11) with respect to the workpiece is obtained.

11. The method according to any of the claims 9-10, wherein the second entering path (L2) is parallel to the first entering path (L1).

12. The method according to any of the previous claims, wherein the metal workpiece (20) further comprises:
- a radial portion (22) extending in the radial direction (X), and
- a corner portion (23) connecting the longitudinal portion (21) and the radial portion (22),
and wherein the first end (41) of the longitudinal portion (21) corresponds to a location at which the longitudinal portion (21) meets the corner portion (23).

13. The method according to claim 12, wherein at least one of the first entering step (31), the positioning step (32), and the second entering step (33) comprises cutting chips from at least a part of the corner portion (23).

14. A system (100) comprising a computer numerical controlled machine tool (101) including a turning tool (10) for machining a metal workpiece (20), wherein the system further comprises processing circuitry (103) and a memory (104) and is configured to perform the method according to any of the claims 1-13.

15. A numerical control program (105), comprising computer readable code means to be executed by the processing circuitry (103) of the system (100) according to claim 14, which computer readable code means when executed causes the system to perform the method according to any of the claims 1-13.

16. A computer program for generating, based on input comprising information about a turning tool and dimensions of a metal workpiece to be machined, the numerical control program according to claim 15.
